(19) Europäisches Patentamt
European Patent Office
Office européen des brevets

(11) Veröffentlichungsnummer: **0 684 265 A1**

# (12) EUROPÄISCHE PATENTANMELDUNG

(21) Anmeldenummer: **95106958.2**

(22) Anmeldetag: **09.05.95**

(51) Int. Cl.[6]: **C08F 218/08**, C08F 216/34, C11D 3/37

(30) Priorität: **20.05.94 DE 4417734**

(43) Veröffentlichungstag der Anmeldung: **29.11.95 Patentblatt 95/48**

(84) Benannte Vertragsstaaten: **AT BE CH DE DK ES FR GB GR IE IT LI NL PT SE**

(71) Anmelder: **DEGUSSA AKTIENGESELLSCHAFT**
**Weissfrauenstrasse 9**
**D-60311 Frankfurt (DE)**

(72) Erfinder: **Kirschey, Michael, Dr.**
**Grünaustrasse 9**
**D-63457 Hanau (DE)**
Erfinder: **Lortz, Beata-Maria, Dr.**
**Feldstrasse 9**
**D-63607 Wächtersbach (DE)**
Erfinder: **Dorn, Klaus, Dr.**
**Treuener Strasse 6**
**D-63457 Hanau (DE)**

## (54) Polycarboxylate.

(57) Die Polycarboxylate weisen schematische Struktur (X, Y, Z), worin
X für

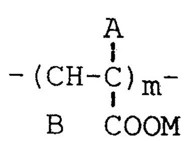

Y für

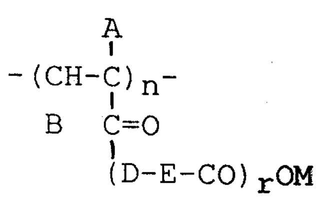

und Z für $-(F)_q-$
steht, worin

A = H, OH, $C_{1-6}$ Alkyl, $CH_2CO(DECO)_{r-1}OM$;
B = H, OH, $C_{1-6}$ Alkyl, COOM;
D = O, NH;
E = $C_{1-6}$ Alkyl, linear bzw. verzweigt;
F = Vinylacetat;
M = H, Alkali- bzw. Erdalkalimetall, Ammonium, substituiertes Ammonium; bei X auch $-(CH_2-CH_2-O)-_{2-4}M$;
r = 1 - 5;

EP 0 684 265 A1

ist und

$$m = 0 - 99{,}5 \text{ Mol \%}$$
$$n = 0{,}5 - 100 \text{ Mol \%}$$
$$q = 0 - 50 \text{ Mol \%},$$

worin $m + n + q = 100$ Mol %
bedeutet, auf.

Die Erfindung betrifft ein Polycarboxylat, das Verfahren zu seiner Herstellung und seine Verwendung in Waschmitteln.

Polycarboxylate werden als Builder bzw. Cobuilder in Wasch- und Reinigungsmitteln eingesetzt.

Aus dem Dokument DE 23 57 036 sind Polycarboxylate mit einer bestimmten biologischen Abbaubarkeit bekannt. Diese bekannten Polycarboxylate werden als Builder zum Aufbau von festen oder flüssigen Reinigungsmitteln eingesetzt. Sie werden hergestellt, indem man Acrolein allein oder in Gegenwart von Acrylsäure in Gegenwart von Thioäthylenglykol oxidativ polymerisiert.

Die bekannten Polycarboxylate haben den Nachteil, daß sie aufgrund des Einsatzes von Thioäthylenglykol nicht geruchsfrei sind.

Aus dem Dokument Matsumura et al. (ACS Symp. Ser. 433 (1990), Seiten 124 bis 135 ist die biologische Abbaubarkeit von Hydrolyseprodukten Vinylacetat-Copolymeren der Acrylsäure bekannt. Diese bekannten Hydrolyseprodukte der Vinylacetat-Copolymeren der Acrylsäure haben den Nachteil, daß sie kein ausreichendes Calciumbindevermögen und damit einhergehend keine ausreichende Buildereigenschaft aufweisen.

Die ältere Anmeldung DE 43 03 320.2 beschreibt Polycarboxylate, die die folgende schematische Struktur (X, Y, Z) aufweisen und worin

X für

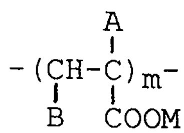

Y für

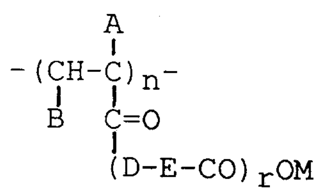

und Z für $-(F)_q-$

steht, worin

A = H, OH, $C_{1-6}$ Alkyl, $CH_2CO(DECO)_{r-1}OM$;

B = H, OH, $C_{1-6}$ Alkyl, COOM;

D = O, NH;

E = $C_{1-6}$ Alkyl, linear bzw. verzweigt;

F = ein copolymerisierbares Monomer;

M = H, Alkali- bzw. Erdalkalimetall, Ammonium, substituiertes Ammonium; bei X auch $-(CH_2-CH_2-O)_{2-4}M$;

r = 1 - 5;

ist und

$$m = 0 - 99{,}5 \text{ Mol } \%$$
$$n = 0{,}5 - 100 \text{ Mol } \%$$
$$q = 0 - 99{,}5 \text{ Mol } \%$$

wobei $m + n + q = 100$ Mol %

bedeutet.

Gegenstand der Erfindung sind Polycarboxylate der schematischen Struktur (X, Y, Z), worin

X für

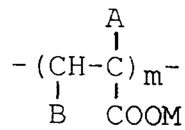

Y für

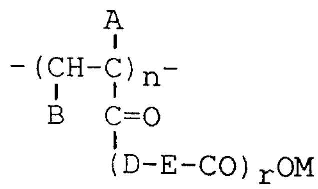

und Z für -$(F)_q$-
steht, worin

A = H, OH, $C_{1-6}$ Alkyl, $CH_2CO(DECO)_{r-1}OM$;
B = H, OH, $C_{1-6}$ Alkyl, COOM;
D = O, NH;
E = $C_{1-6}$ Alkyl, linear bzw. verzweigt;
F = Vinylacetat;
M = H, Alkali- bzw. Erdalkalimetall, Ammonium, substituiertes Ammonium; bei X auch -$(CH_2$-$CH_2$-$O)_{2-4}M$;
r = 1 - 5;

ist und

m = 0 - 99,5 Mol %
n = 0,5 - 100 Mol %
q = 0 - 50 Mol %

wobei m + n + q = 100 Mol %
bedeutet.

Die erfindungsgemäßen Polycarboxylate sind insbesondere gekennzeichnet durch:

| | |
|---|---|
| Molekulargewicht | 2.000 bis 50.000 g/mol |
| Kalkbindevermögen bei Raumtemperatur | > 1.500 mg $CaCO_3$/g |
| Biologische Abbaubarkeit nach Zahn-Wellens | > 30 % |

Die erfindungsgemäßen Polycarboxylate können dadurch hergestellt werden, daß man Acrolein und Vinylacetat in wäßriger Lösung in Gegenwart von Wasserstoffperoxid und gegebenenfalls einen weiteren Comonomeren, das die Struktur X oder Y im Polieren erzeugen kann, polymerisiert.

Die Polycarboxylate können sowohl als Säure als auch als Salz bzw. als teilneutralisierte Substanz hergestellt werden; als Gegenionen eignen sich Metallionen sowie stickstoffhaltige Kationen.

Die erfindungsgemäßen Polycarboxylate der Struktur (X, Y, Z) sind Copolymere aus Acrolein und Vinylacetat sowie gegebenenfalls weiteren Comonomeren. Die Verteilung der Monomeren im Polymer ist üblicherweise statistisch (random), die Endgruppen des Polymers (X, Y, Z) sind üblicherweise die unter den entsprechenden Reaktionsbedingungen entstehenden.

Für die Komponente Y eignen sich sowohl monoethylenisch ungesättigte Aldehyde wie Methacrolein, die während der Polymerisation zur entsprechenden Säure oxidiert werden, als auch monoethylenisch ungesättigte Ester oder höhere Veresterungshomologe sowie Amide, die dem Strukturelement Y entsprechen.

Für die Komponente X eignen sich monoethylenisch ungesättigte $C_3$ bis $C_8$ Mono- bzw. Dicarbonsäuren, wie zum Beispiel Acrylsäure, Methacrylsäure, Fumarsäure, Maleinsäure sowie Maleinsäureanhydrid, Itaconsäure, Citraconsäure, Crotonsäure. Auch geeignet sind die aus diesen Verbindungen abgeleiteten

Ester sowie Amide, die dem Strukturelement X entsprechen.

Die erfindungsgemäß bevorzugten Polycarboxylate sind polymere Cobuilder, die 0,5 - 100 Mol% der Monomerstruktur $-(CH_2-CH-COOR)-$ beinhalten, wobei $R = CH_2-CH_2-COOR'$ und R' H bzw. R ist, sowie ihre Salzform (zum Beispiel Alkalisalz sowie Ammoniumsalz).

In einer bevorzugten Ausführungsform der Erfindung kann das erfindungsgemäße Polycarboxylat aus den Monomeren Acrolein und Vinylacetat hergestellt werden. Sie können dabei in den Mengenverhältnissen Acrolein zu Vinylacetat von 4 : 1 bis 20 : 1 eingesetzt werden. Die erhaltenen bevorzugten Polycarboxylate entsprechen der allgemeinen Formel:

X für

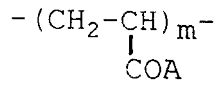

Y für

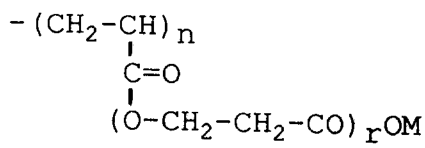

und Z für $-(F)_q-$

steht, worin

A = H, OM;

F = Vinylacetat;

M = H, Alkali- bzw. Erdalkalimetall, Ammonium, substituiertes Ammonium; bei X auch $-(CH_2-CH_2-O)-_{2-4}M$;

r = 1 - 5;

ist und

m = 0 - 99,5 Mol %

n = 0,1 - 30 Mol %

q = 0 - 50 Mol %

wobei m + n + q = 100 Mol %

bedeutet.

Die Molekulargewichtsbestimmung erfolgt über Gelpermeationschromatographie (GPC) an LiChrospher Diol Säulen (Fa. Merck) und mit Phosphatpuffer (pH = 7) als Eluentlösung. Eine Kalibrierung kann am besten mit engverteilter Polyacrylsäure erfolgen. Dabei bewirkt die nicht konstante chemische Zusammensetzung der erfindungsgemäßen Copolymere einen Fehler in dem Absolutwert des Molekulargewichtes. Diese allgemein bekannte Fehlerquelle kann nicht ohne weiteres beseitigt werden, so daß alle hier gemachten Angaben über das Molekulargewicht als relativ zu der Kalibrierung mit Polyacrylsäure zu verstehen sind.

Die Acrylsäurepolymerisate können nach bekannten Verfahren hergestellt werden. Hilfreiche Hinweise dazu sind in "Acrylic and Methacrylic Acid Polymers", J. W. Nemec und W. Bauer jr, und in "Radical Polymerisation", C. H. Baumford, in jew. Vol. 1 und 13 der "Encyclopedia of Polymer Science and Technology", John Wiley & Sons, New York 1990, zu finden. Derartige Verfahren sind auch zum Beispiel in "Acrylic acid polymers", M. L. Mitter in "Encyclopedia of Polymer Science and Technology", Vol. 1 Interscience Publishers, New York 1964, beschrieben.

Die Herstellung der (Co)polymerisate kann durch alle üblichen radikalischen Polymerisationsverfahren geschehen. Beispielsweise werden folgende Herstellmethoden genannt: Lösungspolymerisation, wobei die Monomere in Wasser oder in anderem Lösungsmittel oder Lösungsmittelgemisch mit eventuellen Zusätzen von niedermolekularen organischen und/oder anorganischen Verbindungen gelöst werden. Fällungspolymerisation in solchen Lösungsmitteln, in denen die Monomere mindestens zum Teil löslich und die Polymere

nicht löslich sind. Emulsions- und Suspensionspolymerisation in solchen Lösungsmitteln, in denen die Monomere nicht löslich sind und die Emulsionen bzw. Suspensionen durch Zusatz von nieder- und/oder hochmolekularen Substanzen stabilisiert werden.

Auch eine durch Strahlen induzierte Polymerisation kann zur Herstellung der Polymerisate verwendet werden.

Bevorzugt wird jedoch die Lösungspolymerisation in Wasser.

Die Monomerkonzentration bewegt sich, bezogen auf die Gesamtmischung, zwischen 5 und 70 %, wobei je nach Viskosität der entstehenden Polymerlösung 25 bis 50 % bevorzugt wird.

Als Initiatoren sind sowohl thermisch zersetzbare Radikalspender, die eine ausreichende Löslichkeit im gewählten Lösungsmittel bzw. in den Monomeren aufweisen, als auch mehr-komponentige Redoxinitiatoren geeignet. Bevorzugt sind jedoch wasserlösliche Substanzen wie Wasserstoffperoxid sowie Alkali- oder Ammoniumperoxodisulfate, wobei Wasserstoffperoxid besonders bevorzugt ist.

Die Polymerisationstemperatur wird zusammen mit der Initiatormenge benutzt, um das Molekulargewicht des gewünschten Polymerisats zu steuern. Sie liegt zwischen 30 und 180 °C, wobei es von Vorteil ist, sie zwischen 60 und 130 °C zu halten, wobei gegebenenfalls unter Druck gearbeitet wird. Niedrigere Temperaturen erzeugen meistens hochmolekulare Polymerisate, während zu hohe Temperaturen Polymerabbau und Färbung verursachen können.

In einer bevorzugten Ausführungsform der Erfindung kann die Temperatur zwischen 60 und 90 °C gehalten werden. Die Zulaufgeschwindigkeit der mit Wasserstoffperoxid versetzten Monomere liegt zwischen 10 und 30 ml/h, vorteilhaft zwischen 15 und 20 ml/h. Das Verhältnis Gesamt-Wasserstoffperoxid (gerechnet 100 %ig) zu eingesetzten Monomeren kann 0,2 bis 1,0 betragen, ist vorteilhaft bei 0,4 bis 0,8. Das Verhältnis von vorgelegter zu zugetropfter Wasserstoffperoxid-Menge ist zwischen 1 : 0,5 und 1 : 3 möglich und ist günstig zwischen 1 : 1 und 1 : 2.

Die erfindungsgemäßen Polycarboxylate weisen den Vorteil auf, daß sie neben einem sehr guten Kalkbindevermögen eine sehr gute biologische Abbaubarkeit aufweisen.

Ein weiterer Gegenstand der Erfindung sind Verfahren zum Waschen und Reinigen von textilen Geweben, bei denen man das erfindungsgemäße Polycarboxylat als Builder einsetzt.

Die erfindungsgemäßen Polycarboxylate können sowohl als Cobuilder als auch als Builder in Waschmitteln eingesetzt werden. Bei dem Einsatz als Cobuilder können sie neben bekannten Buildern, wie zum Beispiel Zeolith A, Schichtsilikaten, wie SKS-6 oder amorphen Disilikaten, verwendet werden.

Dabei können sie in Kombination mit wasserlöslichen oder wasserunlöslichen, anorganische und/oder organische Buildermaterialien eingesetzt werden. Geeignete anorganische Buildersubstanzen sind beispielsweise Zeolithe, Phosphate und Natriumsilikate.

Der eingesetzte Zeolith ist vorzugsweise feinteiliger Zeolith NaA. Geeignet sind jedoch auch Zeolith NaX und Zeolith NaP sowie Mischungen dieser drei Zeolithe. Derartige Zeolithe weisen insbesondere eine mittlere Teilchengröße von weniger als 10 µm auf und enthalten vorzugsweise 18 bis 22 Gew.-% Wasser (bestimmt als Glühverlust 1 h bei 1000 °C). Die Zeolithe können aber ebenso als stabilisierte Suspension eingesetzt werden. Hierbei bewirken geringe Mengen an zugesetzten nichtionischen Tensiden eine Stabilisierung der Suspension.

Als Ersatz oder Teilersatz für Phosphate und Zeolithe können amorphe oder kristalline Alkalisilikate vorliegen. Bevorzugte Alkalisilikate sind die Natriumsilikate, insbesondere die amorphen Natriumsilikate, mit einem molaren Verhältnis $Na_2O$ : $SiO_2$ von 1,5 zu 3. Derartige amorphe Alkalisilikate sind beispielsweise unter dem Namen Portil® (Henkel) erhältlich. Auch Cogranulate aus Soda und amorphen Natriumdisilikaten, die zum Beispiel unter der Bezeichnung Nabion 15® (Rhone-Poulenc) bekannt sind, können eingesetzt werden. Als kristalline Silikate, die allein oder im Gemisch mit amorphen Silikaten vorliegen können, werden bevorzugt kristalline schichtförmige Natriumsilikate der allgemeinen Form $NaMSi_xO_{2x+1} \cdot yH_2O$, wobei M Natrium oder Wasserstoff bedeutet, x eine Zahl von 1,9 bis 4 und y eine Zahl von 0 bis 20 ist und ein bevorzugter Wert für x = 2 ist. In dem europäischen Patent EP 0 164 514 sind derartige kristalline Schichtsilikate beschrieben. Insbesondere sind sowohl $\beta$- als auch $\delta$-Natriumdisilikate bevorzugt.

Brauchbare organische Gerüstsubstanzen sind beispielsweise die bevorzugt in Form ihrer Natriumsalze eingesetzten Polycarbonsäuren, wie Weinsäure, Citronensäure, Bernsteinsäure, Adipinsäure, Glutarsäure, Zuckersäuren, Aminocarbonsäuren, Nitrilotriessigsäure sowie Mischungen aus diesen.

Bei einer Kombination der erfindungsgemäßen Verbindung mit den vorgenannten anorganischen und/oder organischen Buildern spielt es keine Rolle, ob die Verbindung in Form von sprühgetrockneten oder auf sonstige Art und Weise vorgemischten Compounds mit den genannten Buildern oder direkt in die Waschmittelzubereitung eingebracht werden.

Ein weiterer Gegenstand der Erfindung sind Wasch- und Reinigungsmittel, die die erfindungsgemäßen Polycarboxylate enthalten.

Beispiel 1

In einem mit Kühler, Rührer und Temperier- sowie Dosiereinrichtungen versehenen Reaktor werden 634 Gewichtsteile entionisiertes Wasser und 146 Teile Wasserstoffperoxid (50 %) vorgelegt und auf 70 °C aufgeheizt. Unter starkem Rühren werden über einen Zeitraum von 4 Stunden 428 Teile Acrolein und 23 Teile Vinylacetat sowie 270 Teile Wasserstoffperoxid (50 %) gleichmäßig zudosiert. Nach dem Ende der Zugabe wird die Temperatur je 30 min auf 70 °C und 80 °C gehalten und schließlich bei 90 °C nachgeheizt, bis das überschüssige Wasserstoffperoxid zerstört ist. Die nach Abkühlen auf Raumtemperatur erhaltene Polymerlösung hat einen pH-Wert von 1.4.

Beispiel 2

In einer wie in Beispiel 1 beschriebenen Apparatur werden 531 Gewichtsteile entionisiertes Wasser und 260 Teile Wasserstoffperoxid (50 %) vorgelegt und auf 70 °C aufgeheizt. Unter starkem Rühren werden über einen Zeitraum von 4 Stunden 428 Teile Acrolein und 23 Teile Vinylacetat sowie 260 Teile Wasserstoffperoxid (50 %) gleichmäßig zudosiert. Nach dem Ende der Zugabe wird wie in Beispiel 1 bis zur Zerstörung des überschüssigen Wasserstoffperoxids nachgeheizt. Die nach Abkühlen auf Raumtemperatur erhaltene Polymerlösung hat einen pH-Wert von 1.3.

Beispiel 3

In einer wie in Beispiel 1 beschriebenen Apparatur werden 380 Gewichtsteile entionisiertes Wasser und 310 Teile Wasserstoffperoxid (50 %) vorgelegt und auf 70 °C aufgeheizt. Unter starkem Rühren werden über einen Zeitraum von 4 Stunden 510 Teile Acrolein und 90 Teile Vinylacetat sowie 310 Teile Wasserstoffperoxid (50 %) gleichmäßig zudosiert. Nach dem Ende der Zugabe wird wie in Beispiel 1 bis zur Zerstörung des Wasserstoffperoxids nachgeheizt. Die nach Abkühlen auf Raumtemperatur erhaltene Polymerlösung hat einen pH-Wert von 1.0.

Beispiel 4

In einer wie in Beispiel 1 beschriebenen Apparatur werden 660 Gewichtsteile entionisiertes Wasser und 153 Teile Wasserstoffperoxid (50 %) vorgelegt und auf 67 °C aufgeheizt. Unter starkem Rühren werden über einen Zeitraum von 4 Stunden 250 Teile Acrolein und 250 Teile Vinylacetat sowie 153 Teile Wasserstoffperoxid (50 %) und 35 Teile entionisiertes Wasser gleichmäßig zudosiert. Nach dem Ende der Zugabe wird 3 Stunden bei 70 °C und 5 Stunden bei 83 - 95 °C bis zur Zerstörung des Wasserstoffperoxids nachgeheizt. Die nach Abkühlen auf Raumtemperatur erhaltene Polymerlösung hat einen pH-Wert von 1.7.

An den aus den Beispielen erhaltenen Polymerlösungen werden die in Tabelle 1 dargestellten Untersuchungen durchgeführt. Als Vergleich werden POC HS 2020, ein Copolymer aus 20 % Acrylsäure und 80 % Acrolein, Degapas 4104 S, ein Acrylsäure-Homopolymer, und Sokalan CP 5, ein Copolymer aus 30 % Acrylsäure und 70 % Maleinsäure, herangezogen.

Folgende Parameter werden bestimmt:

1. Molekulargewicht
2. Kalkbindevermögen bei Raumtemperatur, 60 °C und 90 °C
3. Biologischer Abbau nach Zahn-Wellens

Tabelle 1: Kenndaten Beispiele 1 - 4 und Vergleichsprodukte

| | AC | VA | MW | m | n | q | KBVRT | KBV60 | KBV90 | ZW14 |
|---|---|---|---|---|---|---|---|---|---|---|
| | % | % | g/mol | | | | mg $CaCO_3$/g | mg $CaCO_3$/g | mg $CaCO_3$/g | % |
| Beispiel 1 | 95 | 5 | 4300 | 75-80 | 15-20 | 4 - 5 | 2270 | 1050 | 750 | 31 |
| Beispiel 2 | 95 | 5 | 2800 | 75-80 | 15-20 | 4 - 5 | 1780 | 1030 | 640 | 33 |
| Beispiel 3 | 87 | 15 | 3500 | 70-75 | 10-15 | 8 -10 | 1950 | 1000 | 150 | 46 |
| Beispiel 4 | 50 | 50 | 3800 | 45-50 | 2 - 5 | 40-50 | 5000 | 30 | - | 47 |
| POC HS 2020 | 80 | n.a. | 9500 | | | | 2250 | 1600 | 1100 | 17 |
| Degapas 4104 S | n.a. | n.a. | 90000 | | | | 1600 | 1400 | 500 | 0 |
| Sokalan CP 5 | n.a. | n.a. | 70000 | | | | 1250 | 930 | 760 | 5 |

n.a. = nicht anwendbar

AC = Acrolein
VA = Vinylacetat
MW = Molekulargewicht nach GPC
m,n,q = Molverhältnisse der Monomerbausteine (siehe Formel S. 4)
KBVRT = Kalkbindevermögen bei Raumtemperatur
KBV60 = KBV bei 60 °C
KBV90 = KBV bei 90 °C
ZW14 = Biologischer Abbau nach Zahn-Wellens (14-Tage-Wert) OECD 302 B

## 1. Bestimmung des Kalkbindevermögens

Das Kalkbindevermögen (KBV) ist eine Maßzahl, die angibt, wieviel Milligramm Calciumcarbonat ($CaCO_3$) pro Gramm Komplexbildner bis zu einem bestimmten Grad in Lösung gehalten bzw. dispergiert

werden. Sie wird durch eine Trübungstitration bestimmt.

200 mg des Polymers (berechnet als Feststoff) werden in 100 ml voll entsalztem Wasser gelöst. Der pH-Wert dieser Lösung soll > 6 sein und muß evtl. mit Natronlauge entsprechend korrigiert werden. Danach werden 10 ml 2 %ige Sodalösung hinzugegeben, und der pH-Wert wird mit Natronlauge oder Essigsäure auf 10 eingestellt. Diese Lösung wird mit Calciumacetat (44,1 g/l) titriert, und die durch ausfallendes Calciumcarbonat auftretende Trübung wird mit einer Lichtleitermeßzelle (Wellenlänge = 650 nm) gemessen und registriert. Vor der Titration ist die Transmission der Meßzelle auf 100 % einzustellen. Der KBV-Wert wird bei 50 % Transmission bestimmt.

## 2. Biologischer Abbau nach Zahn-Wellens

Der Abbautest nach Zahn und Wellens ist ein Hilfsmittel, die biologische Abbaubarkeit einer Substanz bzw. eines Abwassers zu beurteilen. Er arbeitet in einem festgelegten Verhältnis des CSB zur Biomasse.

In einem hohen 3 l-Becherglas werden ca. 2 l Biomassesuspension gerührt und über Glasfritten belüftet. Es werden 385 mg $NH_4Cl$ und 89 mg $NaH_2PO_4 \cdot H_2O$ eingewogen, mit der berechneten Polymermenge versetzt und mit kaltem Leitungswasser auf ca. 2 l aufgefüllt. Der Belebtschlamm aus einer kommunalen Kläranlage wird 30 - 60 min absetzen lassen, so daß er ca. um die Hälfte eindickt. Das überstehende Wasser wird abdekantiert und der Schlamm unter Rühren und Belüften aufbewahrt. Jeweils ein Teil des Schlammes wird davon abgenommen und bei 2000 Upm 5 min zentrifugiert. 24 g des zentrifugierten Schlammes auf einen 2 l-Ansatz ergeben einen Trockensubstanzgehalt von 1 g/l (± 20 %). Vor der Zugabe des Schlammes zur Polymerlösung wird der pH auf 6,5 - 7,0 eingestellt und eine Probe auf den CSB-Gehalt hin analysiert. Nachdem sich der Belebtschlamm fein verteilt hat, kann erneut eine Probe entnommen werden. Die Höhe der Flüssigkeit im Becherglas wird dann markiert. Zum Vergleich wird ein Test angesetzt, der nur Nährsalze und Belebtschlamm, jedoch kein Polymer enthält. Dieser Ansatz dient zur Ermittlung des durch den Belebtschlamm verursachten CSB. Mit einem Gummiwischer wird der am Rand des Becherglases abgesetzte Bioschlamm täglich zurück in die Lösung gewischt, der pH-Wert erneut eingestellt und verdunstetes Wasser durch entmineralisiertes Wasser ersetzt. Zur Bestimmung der am Bioschlamm adsorbierten Substanz werden zwei Proben auf ihren CSB-Gehalt analysiert, eine filtrierte Probe und eine unfiltrierte. Die unfiltrierte Probe wird direkt aus dem gut durchmischten Reaktionsgefäß entnommen und gemessen. Für die zu filtrierende Probe wird ein aliquoter Teil, zum Beispiel 40 ml, entnommen, absetzen lassen und über ein Millipor 2,5 $\mu$ Filter (zum Beispiel Millipor Millex GS) filtriert. Die klare Lösung wird ebenfalls auf ihren CSB-Gehalt analysiert.

Berechnung

Um CSB-Gehalt der Substanz zu ermitteln, der an der Biomasse adsorbiert ist, wird vom CSB in der Probelösung mit Biomasse der CSB-Wert der filtrierten Probe und der Blindwert mit Biomasse abgezogen.

P1 unfiltrierte Probelösung mit Schlamm
P2 filtrierte Probelösung
Bls unfiltrierter Blindwert
ad asorbierte Substanz

$$P1 - P2 - Bls = ad$$

Wird von der filtrierten Probe P2 der filtrierte Blindwert abgezogen, so erhält man die gelöste Substanz.

Bl filtrierter Blindwert
S gelöste Substanz

$$P2 - Bl = S$$

Adsorbierte und gelöste Substanz zusammen ergeben den Anfangsgehalt an abzubauendem Stoff bzw. den Gehalt zur Zeit. Der Abbaugrad $\eta$ berechnet sich

A Anfangswert
$\eta$ Abbaugrad

$$\eta = \frac{A-(ad+s)}{A} \cdot 100$$

## Patentansprüche

1. Polycarboxylate, gekennzeichnet durch die schematische Struktur (X, Y, Z), worin X für

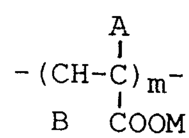

Y für

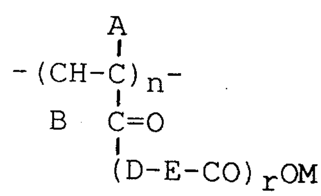

und Z für $-(F)_q-$ steht, worin

| | |
|---|---|
| A = | H, OH, $C_{1-6}$ Alkyl, $CH_2CO(DECO)_{r-1}OM$; |
| B = | H, OH, $C_{1-6}$ Alkyl, COOM; |
| D = | O, NH; |
| E = | $C_{1-6}$ Alkyl, linear bzw. verzweigt; |
| F = | Vinylacetat; |
| M = | H, Alkali- bzw. Erdalkalimetall, Ammonium, substituiertes Ammonium; bei X auch $-(CH_2-CH_2-O)_{2-4}M$; |
| r = | 1 - 5; |

ist und

$$m = 0 - 99{,}5 \text{ Mol } \%$$
$$n = 0{,}5 - 100 \text{ Mol } \%$$
$$q = 0 - 50 \text{ Mol } \%,$$

wobei $m + n + q = 100$ Mol % bedeutet.

2. Verfahren zur Herstellung des Polycarboxylates nach Anspruch 1, dadurch gekennzeichnet, daß man Acrolein und Vinylacetat in wäßriger Lösung in Gegenwart von Wasserstoffperoxid polymerisiert.

3. Verfahren zum Waschen und Reinigen von textilen Geweben, dadurch gekennzeichnet, daß man ein Polycarboxylat nach Anspruch 1 einsetzt.

4. Verwendung des Polycarboxylates nach Anspruch 1 als Cobuilder oder Builder in Waschmitteln.

5. Wasch- und Reinigungsmittel, enthaltend ein Polycarboxylat nach Anspruch 1.

Europäisches Patentamt

# EUROPÄISCHER RECHERCHENBERICHT

Nummer der Anmeldung
EP 95 10 6958

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,P, X | DE-A-43 03 320 (DEGUSSA AG)<br>* Anspruch 1 *<br>* Seite 6, Zeile 38 - Seite 6, Zeile 59 *<br>* Seite 7, Zeile 42 - Seite 7, Zeile 48 *<br>--- | 1-5 | C08F218/08<br>C08F216/34<br>C11D3/37 |
| A | US-A-3 719 647 (F.E.HARDY)<br>--- | | |
| A | US-A-1 746 665 (H.W.MATHESON)<br>----- | | |

RECHERCHIERTE SACHGEBIETE (Int.Cl.6)

C08F
C11D

Der vorliegende Recherchenbericht wurde für alle Patentansprüche erstellt

| Recherchenort | Abschlußdatum der Recherche | Prüfer |
|---|---|---|
| DEN HAAG | 3. Oktober 1995 | Cauwenberg, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument